# EUROPEAN PATENT APPLICATION

(11) **EP 4 844 448 A1**
(43) Date of publication of application: **25.11.2026**
(21) Application number: 26175727.2
(22) Date of filing: 30.04.2026
(51) Int. Cl.: G01S 17/95, G01S 7/497, G01S 13/42, G01S 13/86, G01S 13/88, G01S 17/42, G01S 17/86, G01S 17/87, G01W 1/02

(54) **INTEGRATED SPOTTER SYSTEM AND METHOD FOR HIGH-ALTITUDE LASER SENSING**

(30) Priority: 20.05.2025 US 202519213508
(71) Applicant: Honeywell International Inc., Charlotte, NC 28202 (US)
(72) Inventor: WIEBOLD, Matthew, Charlotte, 28202 (US); DOBBINS, Thomas, Charlotte, 28202 (US); MARK, Robert, Charlotte, 28202 (US); FLETCHER, Patrick, Charlotte, 28202 (US); ARCHMILLER, Matthew, Charlotte, 28202 (US); GAO, Kaizhong, Charlotte, 28202 (US)
(74) Representative: Haseltine Lake Kempner LLP

(57) **Abstract**

A system comprises a laser at a ground location that emits a beam into an atmospheric region and collects beam scattered light; and an integrated spotter in communication with the laser. The integrated spotter comprises a monitoring unit that detects aircraft in flight, and is automatically selectable from a radar monitor, an ADS-B monitor, a camera, a LiDAR monitor, or an acoustic monitor. A processor performs a method comprising obtaining flight information from the monitoring unit to determine a location of aircraft with respect to the location of the laser; calculating a direction of travel of aircraft based on the flight information; identifying a cone angle along a LOS of the laser to define a risk zone in the atmospheric region; determining whether and at what time aircraft will enter the risk zone; and stopping the laser from emitting the beam when an aircraft enters the risk zone.

## Description

### BACKGROUND

High-altitude laser atmospheric sensors employ high-power lasers in ground-based systems. These lasers emit laser light in various directions during operation, and a telescope collects signals from the reflected laser light. Each measurement operation typically lasts about one to two hours, which is necessitated by a requirement for multiple lines of sight (LOS).

Currently, such ground-based systems necessitate a two-person operation. One individual adheres to an operation manual and procedures to initiate the system and the measurement process. The other individual, referred to as a 'spotter', remains outside to identify any aircraft that could potentially intersect with the laser light. Given the high power of the laser beam, it is imperative to ensure that the laser light does not strike any flying aircraft. The alignment and spotting by humans have large uncertainty, thus interrupting the measurement process frequently, particularly when operating near an airport. The measurement process can be interrupted several times during operation, lowering the measured data quality and prolonging the measurement time.

There are a few different approaches that have been studied in the past to try to overcome the above issues. For example, using surveillance cameras has been suggested previously. However, the implementation of surveillance cameras shows that the camera image typically does not provide enough resolution as compared to human eyesight. Another approach is to send out another laser, infrared, or radio frequency (RF) signal, and by looking at the reflected signal, identify the location of the aircraft and provide feedback to the measurement system.

In a different approach, flight information reported for an aircraft is used based on the location of the measurement system. A user can calculate and predict when an aircraft will be hit by the laser light and turn off the laser system during that time. This approach can be very reliable except the flight information needs to be collected in real-time, and the location and trajectory information of the aircraft has certain variations. When the information collected is delayed due to network issues, or a certain type of aircraft does not report its position information, the prediction can be unreliable.

### SUMMARY

A system comprises a laser sensing device positioned at a ground-based operation location, the laser sensing device configured to emit a laser beam in at least one line of sight (LOS) into an atmospheric interrogation region and collect a portion of the laser beam as scattered light from the atmospheric interrogation region; and an integrated spotter unit in operative communication with the laser sensing device. The integrated spotter unit comprises a monitoring unit configured to detect one or more aircraft in flight, wherein the monitoring unit is automatically selectable based on a set of criteria from one or more of the group comprising a radar-based monitor, an automatic dependent surveillance - broadcast (ADS-B)-based monitor, a camera-based monitor, a light detection and ranging (LiDAR)-based monitor, or an acoustic-based monitor. A processor is in operative communication with the monitoring unit, the processor hosting a program module operative to perform a method comprising: obtaining flight information in real-time from the monitoring unit to determine the location of one or more aircraft with respect to the operation location of the laser sensing device; calculating a direction of travel of one or more aircraft based on the flight information; based on a pointing direction of the laser sensing device, identifying a cone angle along a LOS of the laser sensing device to define a zone of risk in the atmospheric interrogation region; determining whether and at what time one or more aircraft will enter the zone of risk; and stopping the laser sensing device from emitting the laser beam when one or more aircraft enters the zone of risk.

### BRIEF DESCRIPTION OF THE DRAWINGS

Features of the present invention will become apparent to those skilled in the art from the following description with reference to the drawings. Understanding that the drawings depict only typical embodiments and are not therefore to be considered limiting in scope, the invention will be described with additional specificity and detail through the use of the accompanying drawings, in which:
Figure 1A is a block diagram of a system for use in high-altitude atmospheric sensing, according to one embodiment;
Figure 1B is a flow diagram for an exemplary aircraft spotter algorithm, which can be employed in the system of Figure 1A;
Figure 2 is a flow diagram of an operational method for a monitoring unit used in a high-altitude atmospheric sensing system, according to one implementation;
Figure 3 is a flow diagram of a method for use in high-altitude atmospheric sensing, according to an example implementation;
Figures 4A and 4B illustrate an atmospheric sensing device, according to one embodiment;
Figures 5A and 5B are a set of maps on which the shapes of cones produced by the atmospheric sensing device of Figures 4A and 4B are represented;
Figures 6A-6D are a set of maps illustrating an example of a process used in high-altitude atmospheric sensing; and
Figure 7 is an exemplary timing diagram representing uses of various options for high-altitude atmospheric sensing.

### DETAILED DESCRIPTION

In the following detailed description, embodiments are described in sufficient detail to enable those skilled in the art to practice the invention. It is to be understood that other embodiments may be utilized without departing from the scope of the invention. The following detailed description is, therefore, not to be taken in a limiting sense.

An integrated spotter system and method for high-altitude laser sensing are described herein.

The present approach utilizes flight information provided in real-time, such as from a flight information service, to obtain nearby aircraft locations with respect to a ground-based operation location of the high-altitude laser sensing system. Based on a flight moving direction of the aircraft, the method calculates and projects the travel direction. Based on a pointing direction of the laser sensing system, the method identifies a cone angle along an operation direction to determine a risk zone. The method then determines whether any aircraft may enter the risk zone and at what time the aircraft will enter the risk zone. The method turns off the laser transmitter when an aircraft enters the risk zone.

In one embodiment, the laser sensing system is implemented as a remotely-operated, ground-based weather information system that provides near real-time, high-altitude atmospheric measurements. During operation, the laser sensing system sends laser beam pulses into the sky to measure the atmosphere in targeted areas of interest, and can provide data as frequently as every few minutes, such as atmospheric pressure, temperature, humidity, and wind speed/direction.

In one embodiment, the laser sensing system integrates a detection sensor/camera such as a digital surveillance camera that is self-aligned with a laser transmitter. The camera can be installed and integrated with a telescope case. The camera can be aligned in the same direction as a telescope. In one embodiment, the camera is embedded in the same case as the telescope and may be directly wired. The camera is activated just before the atmospheric measurement begins and remains operational throughout the measurement process. Any aircraft within the camera's field of view will be displayed such as on a laptop screen. In one embodiment, the camera can be connected to a laptop or personal computer via a wired connection. During operation, the camera transmits video/audio information to the laptop or other remote computers, enabling an operator to see any aircraft that flies near the laser LOS and stop the measurement when necessary. The camera and a microphone associated with the camera can be tuned to be in a zoom-in condition, such as 5x, 10x, or greater.

In another embodiment, a software algorithm can be employed to identify when an aircraft appears in a camera video feed, and determine whether the measurement process should be stopped. In one implementation, this stop decision is based on the aircraft's direction and three-dimensional (3D) position including its position and height. The algorithm predicts the flight path and determines if the aircraft will intersect the laser path within a LOS cone angle.

In a further implementation, the stop decision can be based on whether the aircraft enters a risk zone. The determination of risk zones can be customized and changed over time using a software algorithm. In one example embodiment, the risk zone is a rounded shaped cone starting from the laser with a small cone angle around the laser emission direction. The size of the cone depends on the laser power used in the measurement and the accuracy of the spotter detection technology. The cone angle can be reduced using a method that can accurately and consistently determine the nearby aircraft position and stop the laser operation in real time. However, the cone angle can be increased if the determination of nearby aircraft position has a larger uncertainty, such as by a human spotter. In another embodiment, the software algorithm can use the defined risk zone to automatically screen and determine if a risk exists, and stop the measurement when the risk is identified.

The present approach provides for increased operational efficiency and safety in using a high powered laser sensing system for atmospheric sensing.

Further details of various embodiments are described hereafter and with reference to the drawings.

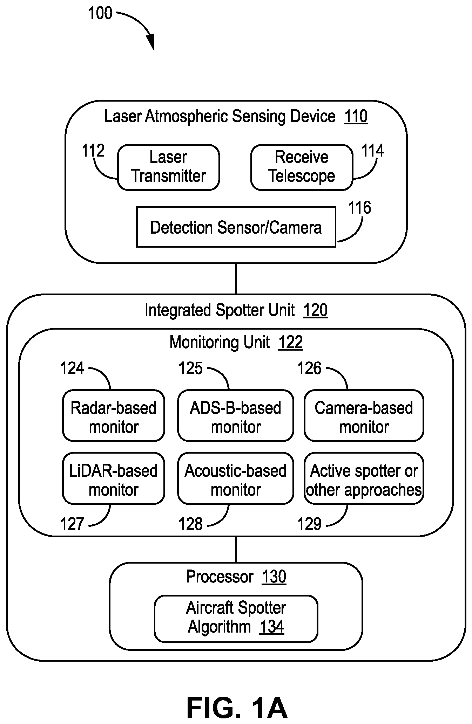

Figure 1A illustrates a system 100 for use in high-altitude atmospheric sensing, according to one embodiment. The system 100 generally includes a laser atmospheric sensing device 110 positioned at a ground-based operation center. An integrated spotter unit 120 is in the ground-based operation center and is in operative communication with the laser atmospheric sensing device 110.

In one embodiment, the laser atmospheric sensing device 110 includes a laser transmitter 112, a receive telescope 114, and a detection sensor/camera 116. The laser transmitter 112 is configured to emit a laser beam, such as a pulsed beam, in at least one line of sight (LOS) into an atmospheric interrogation region, and the receive telescope 114 is configured to collect a portion of the laser beam as scattered light from the atmospheric interrogation region. In one embodiment, the laser transmitter 112 can include a high-powered laser and can be part of a light detection and ranging (LiDAR) apparatus along with the receive telescope 114. In one embodiment, the detection sensor/camera 116 can be aligned in the same direction as the receive telescope 114. The detection sensor/camera 116 can also be embedded with the receive telescope and may be directly wired thereto. In addition, the detection sensor/camera 116 can be self-aligned with the laser transmitter 112. The detection sensor/camera 116 can be installed and integrated with a protective case that houses the other components of the laser atmospheric sensing device 110.

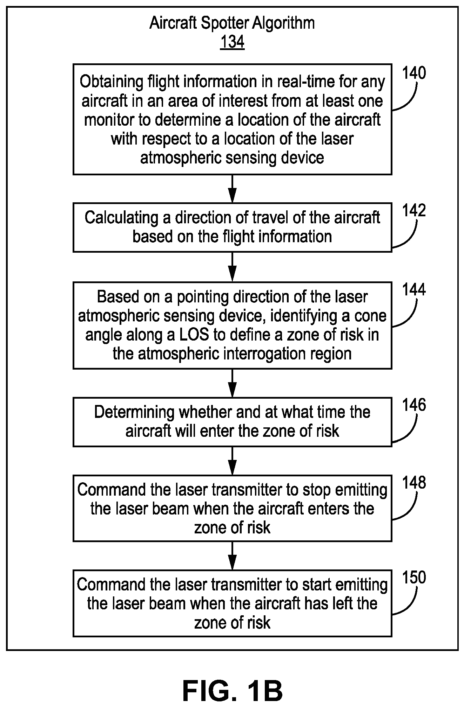

The integrated spotter unit 120 comprises a monitoring unit 122 for detecting one or more aircraft in flight. The monitoring unit 122 can include two or more of a radar-based monitor 124, an automatic dependent surveillance-broadcast (ADS-B)-based monitor 125, a camera-based monitor 126, a light detection and ranging (LiDAR)-based monitor 127, and acoustic-based monitor 128, and/or an active spotter (or other approaches) 129. One or more of these monitors can be automatically activated based on a set of user selected criteria, as describe further hereafter. A processor 130 is in operative communication with the monitoring unit 132. The processor 130 hosts a program module that includes an aircraft spotter algorithm 134, which is described further hereafter with respect to Figure 1B.

As shown in Figure 1A, the laser atmospheric sensing device 110 is separated from the integrated spotter unit 120. In another embodiment, the integrated spotter unit 120 can be housed together with the laser atmospheric sensing device 110. In addition, although the radar-based monitor 124, the ADS-B-based monitor 125, the camera-based monitor 126, the LiDAR-based monitor 127, and the acoustic-based monitor 128 can be housed together in the monitoring unit 122 as shown in Figure 1A, in other embodiments one or more of these monitors can be located in separate devices from each other.

During operation of system 100, while the laser transmitter 112 is emitting a laser beam into an atmospheric interrogation region of interest, the aircraft spotter algorithm 134 (Fig. 1B) obtains flight information in real-time for any aircraft in an area of interest from at least one of the monitors, to determine a location of the aircraft with respect to a location of the laser atmospheric sensing device 110 (block 140). The aircraft spotter algorithm 134 then calculates a direction of travel of the aircraft based on the flight information (block 142). Based on a pointing direction of the laser atmospheric sensing device 110, the aircraft spotter algorithm 134 identifies a cone angle along a LOS to define a zone of risk in the atmospheric interrogation region (block 144), and determines whether and at what time the aircraft will enter the zone of risk (block 146). The aircraft spotter algorithm 134 initiates a command to the laser transmitter 112 to stop emitting the laser beam when the aircraft enters the zone of risk (block 148). When the aircraft has left the zone of risk, the aircraft spotter algorithm 134 issues a command to the laser transmitter to start emitting the laser beam again (block 150).

In some embodiments, the cone angle of the zone of risk can be in a range from about 0.1 degree to about 10 degrees. In other embodiments, the cone angle of the zone of risk can be in a range from about 1 degree to about 5 degrees.

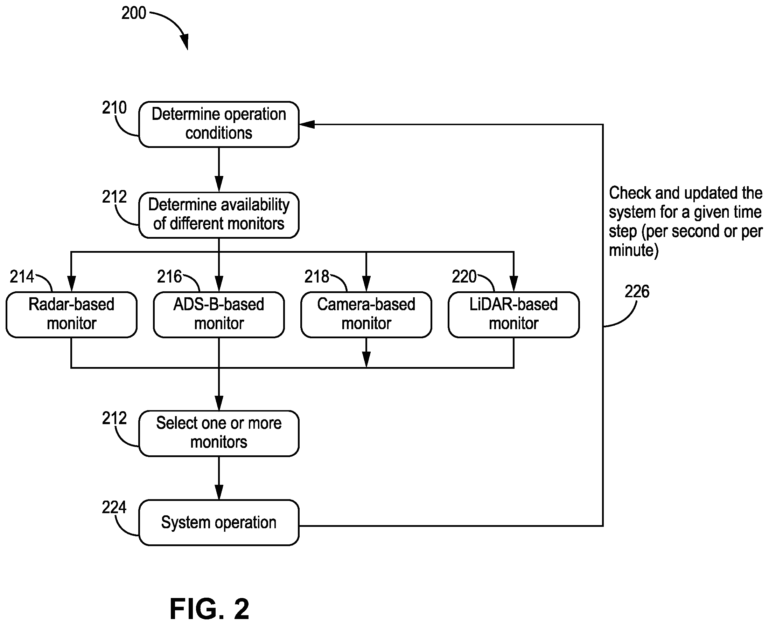

Figure 2 is a flow diagram of an operational method 200 for a monitoring unit used in the present system, according to one implementation. When a laser measurement operation is ready to start, the method 200 determines the operation conditions (block 210), such as time and weather conditions. The method 200 then determines the availability of different monitors (block 212). These monitors can include a radar-based monitor 214, an ADS-B-based monitor 216, a camera-based monitor 218, a LiDAR-based monitor 220, and the like. The method 200 then selects one or more of these monitors (block 222), which can be a primary monitor and a secondary monitor from among these monitors. The method 200 then initiates a system operation using the selected monitor(s) (block 224). The method 200 performs a check and update operation of the system for a given time step or interval (e.g., per second or per minute) at 226, and repeats starting at block 210 until the laser measurement operation is completed.

It will be understood that each of the different monitor methods can be in operation during a measurement. The system collects data from the selected monitor(s), and uses the collected data to determine if there are any aircraft entering the risk zone. In other words, when two or more monitors are used to determine if an aircraft enters the risk zone, all of the monitors may provide data back to the system, but only the most reliable data is selected to make a decision. The other monitors continue to operate even if their data is not used.

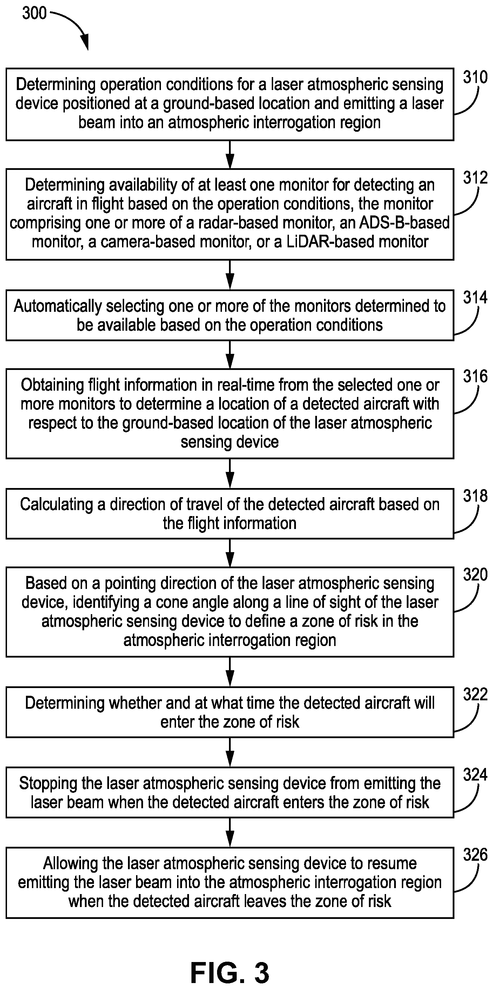

Figure 3 is a flow diagram of a method 300 for use in high-altitude atmospheric sensing, according to an example implementation. The method 300 comprises determining operation conditions for a laser atmospheric sensing device positioned at a ground-based location and emitting a laser beam into an atmospheric interrogation region (block 310). The method 300 determines the availability of at least one monitor for detecting an aircraft in flight based on the operation conditions, with the monitor including one or more of the group comprising a radar-based monitor, an ADS-B-based monitor, a camera-based monitor, or a LiDAR-based monitor (block 312). The method 300 then automatically selects one or more of the monitors determined to be available based on the operation conditions (block 314).

Thereafter, the method 300 obtains flight information in real-time from the selected one or more monitors to determine a location of a detected aircraft with respect to the ground-based location of the laser atmospheric sensing device (block 316). The method 300 then calculates a direction of travel of the detected aircraft based on the flight information (block 318). Based on a pointing direction of the laser atmospheric sensing device, the method 300 identifies a cone angle along a line of sight of the laser atmospheric sensing device to define a zone of risk in the atmospheric interrogation region (block 320). The method 300 then determines whether and at what time the detected aircraft will enter the zone of risk (block 322). The method 300 stops the laser atmospheric sensing device from emitting the laser beam when the detected aircraft enters the zone of risk (block 324). The method 300 then allows the laser sensing device to resume emitting the laser beam into the atmospheric interrogation region when the detected aircraft leaves the zone of risk (block 326).

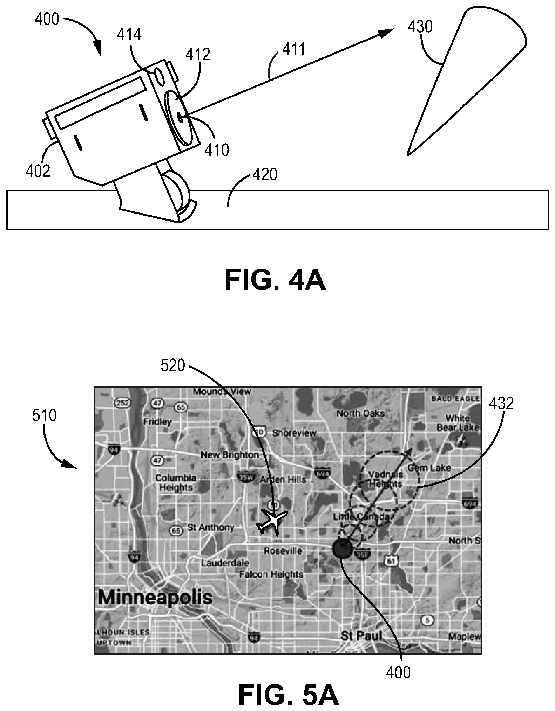

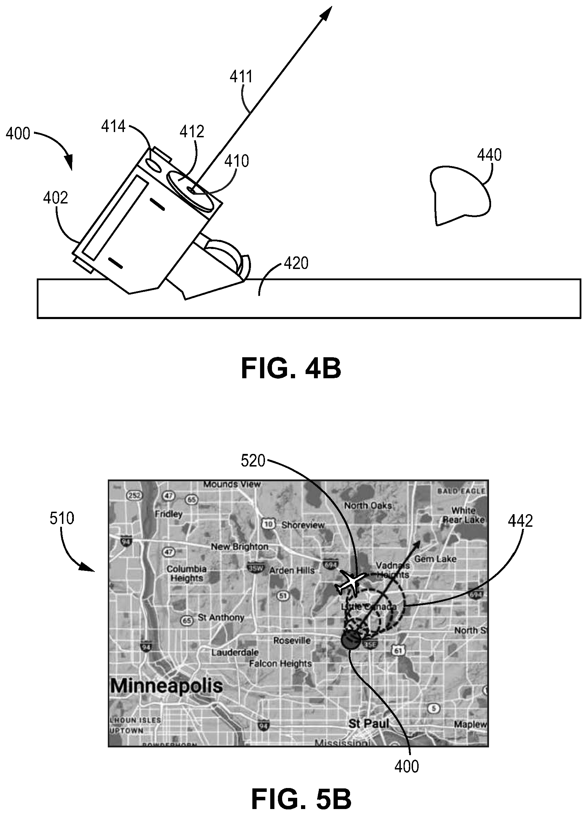

Figures 4A and 4B illustrate a LiDAR atmospheric sensing device 400, according to one example embodiment, which can be used in the present approach. The LiDAR atmospheric sensing device 400 includes a protective case 402 that houses a laser transmitter 410 configured to emit a laser beam 411, a receive telescope 412, and a digital camera 414. The digital camera 414 can be installed to be aligned in the same direction as the receive telescope 412. Once aligned, the digital camera 414 maintains good alignment with the receive telescope 412 without the need for additional alignment or maintenance work during operation. In one embodiment, the digital camera can be installed and integrated with the receive telescope. The LiDAR atmospheric sensing device 400 is mounted on a platform 420, such as at a ground-based operation center, so that it can be tilted at various angles during operation. The determination of a cone size can be based on the tilt angle selected while using the LiDAR atmospheric sensing device 400.

As shown in Figure 4A, a lower tilt angle (from the horizontal direction), results in a larger shape of a cone cross section 430 at a given altitude. In one example shown in Figure 5A, the shape of the cone cross section 430 is represented by a preset risk zone region 432 on a map 510, which illustrates the camera view angle vs. the risk zone selected. The lower tilt angle will lead to a larger cone size that extends in a horizontal direction, especially when aircraft altitude information is not easily extractable, and there is a larger zone of risk at the same altitude. As shown in Figure 4B a higher tilt angle (from the horizontal direction), results in a more compact size of a cone cross section 440 at a given altitude. In one example shown in Figure 5B, the shape of the cone cross section 440 is represented by a preset risk zone region 442 on the map 510, which again illustrates the camera view angle vs. the risk zone selected. In some embodiments, the risk zone cone angle can be as small as about 5-10 degrees, and the camera view angle can be up to about 10-20 degrees.

During operation, the digital camera 414 is auto-aligned with the receive telescope 412, and the camera zoom is adjusted, typically to reduce the view angle to about a 5-30 degrees cone angle, which is adjustable. In one example, when an aircraft 520 is not within a LOS 415 of the digital camera 414 and the risk zone region 432 (Fig. 5A), data collection is performed by the LiDAR atmospheric sensing device 400. In another example, when the aircraft 520 is within the LOS 415 of the digital camera 414 and the risk zone region 442 (Fig. 5B), data collection is halted by the LiDAR atmospheric sensing device 400.

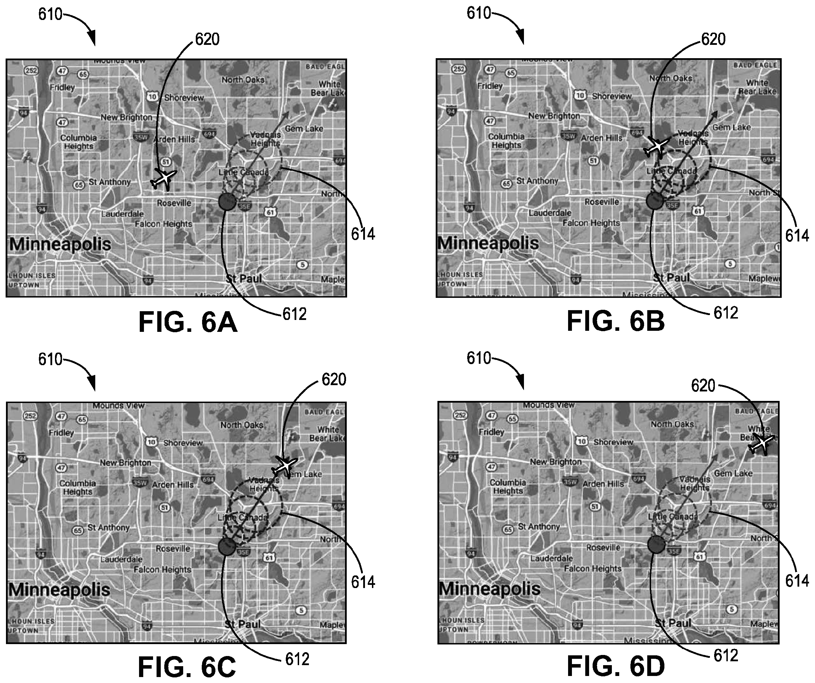

Figures 6A-6D are a set of maps 610 illustrating another example of the process involved in operation of a camera-assisted spotter used with a LiDAR atmospheric sensing device 612. As shown in Figure 6A, the LiDAR atmospheric sensing device 612 conducts data collection in a preset risk zone region 614 within camera view when an aircraft 620 is not detected. The LiDAR atmospheric sensing device 612 stops data collection when the aircraft 620 enters the risk zone region 614 within the camera view, as shown in Figure 6B. The LiDAR atmospheric sensing device 612 remains stopped as the aircraft 620 passes through the risk zone region 614 within the camera view, as depicted in Figure 6C, until the aircraft 620 leaves the risk zone region 614. As shown in Figure 6D, the LiDAR atmospheric sensing device 612 continues data collection when the aircraft 620 is outside of the risk zone region 614.

Table 1 below lists various options that can be used in conjunction with the present approach, including suitable conditions for using each option and the limitations of each option, which can be used in the set of criteria for selecting a particular option.

**Table 1**

| **Options** | **Suitable conditions** | **Limitations** |
|---|---|---|
| O1: Radar-based monitor. | Commercial aircraft; all time and weather conditions. | Solar storms; military aircraft; disclose positions. Some setup have poor resolution. |
| O2: ADS-B-based; other data collection and prediction systems. | Commercial aircraft; network access available; all time and weather conditions. | GPS or signal jams; network traffic, and hacked, with time delay; requires predictive modeling or large uncertainty. Military aircraft. |
| O3: Camera-based | Daytime or relatively clear sky. High resolution when working. | Night and heavy cloudy conditions. |
| O4: LiDAR-based | All times. | Laser safety. Military Aircraft. |
| O5: Acoustic based module | All times when device in operation. | Relatively poor resolution. |
| O6: Human spotter or other methods | All possible operating conditions. | Relative high uncertainty/error rate. |

Table 2 below lists the various hardware requirements and processes to achieve the functions of the options listed in Table 1.

**Table 2**

| **Options** | **Hardware Requirements and Processes to Achieve the Function** |
|---|---|
| O1: Radar-based monitor. | Commercial-off-the-shelf (COTS) solution, integrated into the system. |
| | Use an array of antennas, to determine the position and distance of aircraft along LOS direction. |
| | If the aircraft enters the risk zone (a small cone angle along LOS), close the laser shutter. |
| | Repeat the previous 2 steps. |
| O2: ADS-B-based; other data collection and prediction systems. | Collect ADS-B aircraft location information. |
| | Based on the information collected, predict the aircraft flying trace, and determine if aircraft will intercept with LOS or the risk zone. |
| | If the aircraft enters the risk zone (a small cone angle along LOS), close the laser shutter. |
| | Repeat the previous 2 steps. |
| O3:Camera-based or LiDAR-based. | Set up the camera, instead of a wide angle, keep zoom in condition 10X or 5X, with a relatively small cone angle (< 20°). |
| | The camera is mounted on the same platform as the telescope and rotated with the telescope (i.e., create a self-aligned condition). |
| | Use pattern recognition, to identify aircraft entering the view zone, and track until it enters the risk zone. |
| | If the aircraft enters the risk zone (a small cone angle along LOS), close the laser shutter. |
| | Repeat the previous 2 steps. |
| | For the LiDAR approach, use a telescope and camera together, and achieve the same results. |
| O4: Active spotter or other approaches. | Hear and monitor aircraft near LOS. |
| | If the aircraft enters the risk zone (a small cone angle along LOS), close the laser shutter. |
| | Repeat the previous 2 steps. |

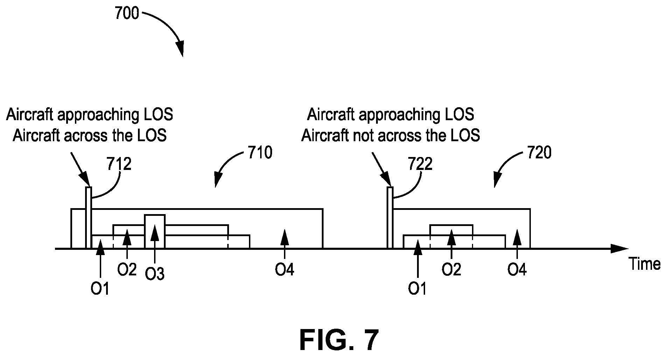

Figure 7 is a timing diagram 700 representing use of the various options listed in Tables 1 and 2. In a first scenario 710, an aircraft approaching the LOS and going across the LOS is indicated at 712. In a second scenario 720, an aircraft approaching the LOS but not actually going across the LOS is indicated at 722. In the first scenario 710, the options O1, O2, O3, and O4 are available for use during varying time periods, depending on the conditions and limitations listed in Table 1. In the second scenario 720, since the aircraft does not go across the LOS, the option O3 is not available to detect the aircraft, whereas the other options O1, O2, and O4 can be used to detect the aircraft.

The processing units and/or other computational devices used in the systems and method described herein may be implemented using software, firmware, hardware, or appropriate combinations thereof. The processing unit and/or other computational devices may be supplemented by, or incorporated in, specially-designed application-specific integrated circuits (ASICs) or field programmable gate arrays (FPGAs). In some implementations, the processing unit and/or other computational devices may communicate through an additional transceiver with other computing devices outside of the navigation system, such as those associated with a management system or computing devices associated with other subsystems controlled by the management system. The processing unit and/or other computational devices can also include or function with software programs, firmware, or other computer readable instructions for carrying out various process tasks, calculations, and control functions used in the methods and systems described herein.

The methods described herein may be implemented by computer executable instructions, such as program modules or components, which are executed by at least one processor or processing unit. Generally, program modules include routines, programs, objects, data components, data structures, algorithms, and the like, which perform particular tasks or implement particular abstract data types.

Instructions for carrying out the various process tasks, calculations, and generation of other data used in the operation of the methods described herein can be implemented in software, firmware, or other computer readable instructions. These instructions are typically stored on appropriate computer program products that include computer readable media used for storage of computer readable instructions or data structures. Such a computer readable medium may be available media that can be accessed by a general purpose or special purpose computer or processor, or any programmable logic device.

Suitable computer readable storage media may include, for example, nonvolatile memory devices including semi-conductor memory devices such as Random Access Memory (RAM), Read Only Memory (ROM), Electrically Erasable Programmable ROM (EEPROM), or flash memory devices; magnetic disks such as internal hard disks or removable disks; optical storage devices such as compact discs (CDs), digital versatile discs (DVDs), Blu-ray discs; or any other media that can be used to carry or store desired program code in the form of computer executable instructions or data structures.

### Example Embodiments

Example 1 includes a system comprising: a laser sensing device positioned at a ground-based operation location, the laser sensing device configured to emit a laser beam in at least one line of sight (LOS) into an atmospheric interrogation region and collect a portion of the laser beam as scattered light from the atmospheric interrogation region; and an integrated spotter unit in operative communication with the laser sensing device, the integrated spotter unit comprising: a monitoring unit configured to detect one or more aircraft in flight, wherein the monitoring unit is automatically selectable based on a set of criteria from one or more of the group comprising a radar-based monitor, an automatic dependent surveillance - broadcast (ADS-B)-based monitor, a camera-based monitor, a light detection and ranging (LiDAR)-based monitor, or an acoustic-based monitor; and a processor in operative communication with the monitoring unit, the processor hosting a program module operative to perform a method comprising: obtaining flight information in real-time from the monitoring unit to determine the location of one or more aircraft with respect to the operation location of the laser sensing device; calculating a direction of travel of one or more aircraft based on the flight information; based on a pointing direction of the laser sensing device, identifying a cone angle along a LOS of the laser sensing device to define a zone of risk in the atmospheric interrogation region; determining whether and at what time one or more aircraft will enter the zone of risk; and stopping the laser sensing device from emitting the laser beam when one or more aircraft enters the zone of risk.

Example 2 includes the system of Example 1, wherein the laser sensing device comprises a laser transmitter, a receive telescope, and a detection sensor/camera.

Example 3 includes the system of Example 2, wherein the laser transmitter is configured to emit a pulsed beam into the atmospheric interrogation region, and the receive telescope is configured to collect a portion of the pulsed beam as scattered light from the atmospheric interrogation region.

Example 4 includes the system of any of Examples 2-3, wherein the laser transmitter and the receive telescope are part of a LiDAR apparatus.

Example 5 includes the system of any of Examples 2-4, wherein the detection sensor/camera is aligned in the same direction as the receive telescope.

Example 6 includes the system of any of Examples 2-5, wherein the detection sensor/camera is self-aligned with the laser transmitter.

Example 7 includes the system of any of Examples 1-6, wherein the integrated spotter unit is operative to check and update the operation of the laser sensing device at a given time interval.

Example 8 includes the system of any of Examples 1-7, wherein the method performed by the program module further comprises: allowing the laser sensing device to resume emitting the laser beam into the atmospheric interrogation region when one or more aircraft leaves the zone of risk.

Example 9 includes a method comprising: determining operation conditions for a laser sensing device positioned at a ground-based location, the laser sensing device configured to emit a laser beam into an atmospheric interrogation region, and collect a portion of the laser beam as scattered light from the atmospheric interrogation region; determining availability of at least one monitoring unit for detecting one or more aircraft in flight based on the operation conditions; automatically selecting the at least one monitoring unit determined to be available based on the operation conditions; obtaining flight information in real-time from the at least one monitoring unit to determine a location of one or more aircraft with respect to the location of the laser sensing device; calculating a direction of travel of the one or more aircraft based on the flight information; based on a pointing direction of the laser sensing device, identifying a cone angle along a line of sight of the laser sensing device to define a zone of risk in the atmospheric interrogation region; determining whether and at what time the one or more aircraft will enter the zone of risk; and stopping the laser sensing device from emitting the laser beam when the one or more aircraft enters the zone of risk.

Example 10 includes the method of Example 9, further comprising: allowing the laser sensing device to resume emitting the laser beam into the atmospheric interrogation region when the detected aircraft leaves the zone of risk.

Example 11 includes the method of any of Examples 9-10, wherein the at least one monitoring unit comprises: one or more of a radar-based monitor, an automatic dependent surveillance-broadcast (ADS-B)-based monitor, a camera-based monitor, a light detection and ranging (LiDAR)-based monitor, or an acoustic-based monitor.

Example 12 includes the method of any of Examples 9-11, further comprising: performing a check and update operation of the laser sensing device at a given time interval.

Example 13 includes the method of any of Examples 9-12, wherein the laser sensing device comprises a laser transmitter, a receive telescope, and a detection sensor/camera.

Example 14 includes the method of Example 13, wherein the laser transmitter emits a pulsed beam into the atmospheric interrogation region, and the receive telescope collects a portion of the pulsed beam as reflected light from the atmospheric interrogation region.

Example 15 includes the method of any of Examples 13-14, wherein the laser transmitter and the receive telescope are part of a LiDAR apparatus.

Example 16 includes the method of any of Examples 13-15, wherein the detection sensor/camera is aligned in a same direction as the receive telescope.

Example 17 includes the method of any of Examples 13-16, wherein the detection sensor/camera is self-aligned with the laser transmitter.

Example 18 includes the method of any of Examples 9-17, wherein the cone angle of the zone of risk is in a range from about 0.1 degree to about 10 degrees.

Example 19 includes a method comprising: providing a laser sensing device positioned at a ground-based operation location, the laser sensing device configured to emit a laser beam in at least one line of sight (LOS) into an atmospheric interrogation region, and collect a portion of the laser beam as reflected light from the atmospheric interrogation region; and providing an integrated spotter unit in operative communication with the laser sensing device, the integrated spotter unit comprising: a monitoring unit for detecting one or more aircraft in flight, wherein the monitoring unit is automatically selectable based on a set of criteria from two or more of the group comprising a radar-based monitor, an automatic dependent surveillance - broadcast (ADS-B)-based monitor, a camera-based monitor, a light detection and ranging (LiDAR)-based monitor, or an acoustic-based monitor; and a processor in operative communication with the monitoring unit, the processor hosting a program module operative to perform a method comprising: obtaining flight information in real-time from the monitoring unit to determine a location of one or more aircraft with respect to the operation location of the laser sensing device; calculating a direction of travel of the one or more aircraft based on the flight information; based on a pointing direction of the laser sensing device, identifying a cone angle along a LOS of the laser sensing device to define a zone of risk in the atmospheric interrogation region; determining whether and at what time the one or more aircraft will enter the zone of risk; stopping the laser sensing device from emitting the laser beam when the one or more aircraft enters the zone of risk; and allowing the laser sensing device to resume emitting the laser beam into the atmospheric interrogation region when the one or more aircraft leaves the zone of risk.

Example 20 includes the method of Example 19, wherein the cone angle of the zone of risk is in a range from about 1 degree to about 5 degrees.

The present invention may be embodied in other specific forms without departing from its essential characteristics. The described embodiments are to be considered in all respects only as illustrative and not restrictive. The scope of the invention is therefore indicated by the appended claims rather than by the foregoing description. All changes that come within the meaning and range of equivalency of the claims are to be embraced within their scope.

## Claims

1. A system comprising:
a laser sensing device positioned at a ground-based operation location, the laser sensing device configured to emit a laser beam in at least one line of sight (LOS) into an atmospheric interrogation region and collect a portion of the laser beam as scattered light from the atmospheric interrogation region; and
an integrated spotter unit in operative communication with the laser sensing device, the integrated spotter unit comprising:
a monitoring unit configured to detect one or more aircraft in flight, wherein the monitoring unit is automatically selectable based on a set of criteria from one or more of the group comprising a radar-based monitor, an automatic dependent surveillance - broadcast (ADS-B)-based monitor, a camera-based monitor, a light detection and ranging (LiDAR)-based monitor, or an acoustic-based monitor; and
a processor in operative communication with the monitoring unit, the processor hosting a program module operative to perform a method comprising:
obtaining flight information in real-time from the monitoring unit to determine the location of one or more aircraft with respect to the operation location of the laser sensing device;
calculating a direction of travel of one or more aircraft based on the flight information;
based on a pointing direction of the laser sensing device, identifying a cone angle along a LOS of the laser sensing device to define a zone of risk in the atmospheric interrogation region;
determining whether and at what time one or more aircraft will enter the zone of risk; and
stopping the laser sensing device from emitting the laser beam when one or more aircraft enters the zone of risk.

2. The system of claim 1, wherein the laser sensing device comprises a laser transmitter, a receive telescope, and a detection sensor/camera.

3. The system of claim 2, wherein the laser transmitter is configured to emit a pulsed beam into the atmospheric interrogation region, and the receive telescope is configured to collect a portion of the pulsed beam as scattered light from the atmospheric interrogation region.

4. The system of claim 2, wherein the laser transmitter and the receive telescope are part of a LiDAR apparatus.

5. The system of claim 2, wherein the detection sensor/camera is aligned in the same direction as the receive telescope.

6. The system of claim 2, wherein the detection sensor/camera is self-aligned with the laser transmitter.

7. The system of claim 1, wherein the integrated spotter unit is operative to check and update the operation of the laser sensing device at a given time interval.

8. The system of claim 1, wherein the method performed by the program module further comprises:
allowing the laser sensing device to resume emitting the laser beam into the atmospheric interrogation region when one or more aircraft leaves the zone of risk.

9. A method comprising:
determining operation conditions for a laser sensing device positioned at a ground-based location, the laser sensing device configured to emit a laser beam into an atmospheric interrogation region, and collect a portion of the laser beam as scattered light from the atmospheric interrogation region;
determining availability of at least one monitoring unit for detecting one or more aircraft in flight based on the operation conditions;
automatically selecting the at least one monitoring unit determined to be available based on the operation conditions;
obtaining flight information in real-time from the at least one monitoring unit to determine a location of one or more aircraft with respect to the location of the laser sensing device;
calculating a direction of travel of the one or more aircraft based on the flight information;
based on a pointing direction of the laser sensing device, identifying a cone angle along a line of sight of the laser sensing device to define a zone of risk in the atmospheric interrogation region;
determining whether and at what time the one or more aircraft will enter the zone of risk; and
stopping the laser sensing device from emitting the laser beam when the one or more aircraft enters the zone of risk.

10. The method of claim 9, wherein the cone angle of the zone of risk is in a range from about 0.1 degree to about 10 degrees.
